# EUROPÄISCHE PATENTSCHRIFT

(11) **EP 1 900 280 B1**
(45) Veröffentlichungstag und Bekanntmachung des Hinweises auf die Patenterteilung: **24.12.2008**
(21) Anmeldenummer: 07450157.8
(22) Anmeldetag: 13.09.2007
(51) Int. Cl.: A01M 1/10

(54) **Auffangbehälter**
Collecting vessel
Récipient collecteur

(30) Priorität: 14.09.2006 AT 15342006
(43) Veröffentlichungstag der Anmeldung: 19.03.2008
(73) Patentinhaber: Witasek, Peter, 9560 Feldkirchen (AT)
(72) Erfinder: Witasek, Peter, 9560 Feldkirchen (AT)
(74) Vertreter: Beer, Manfred

(56) Entgegenhaltungen:
- EP-A- 0 144 994
- DE-A1- 3 337 081
- DE-U1-5202005 015 93

## Beschreibung

Die Erfindung betrifft einen Auffangbehälter für Schlitzfallen mit den Merkmalen des einleitenden Teils von Anspruch 1.

Borkenkäfer-Schlitzfallen sind bekannt. In diesem Zusammenhang kann auf die Borkenkäfer - Schlitzfalle von Theysohn (DE-A-3505637)hingewiesen werden.

Derartige Fallen werden bei der integrierten Bekämpfung und Reduzierung der Borkenkäfer sowie anderer holzbrütender Käferarten angewendet.

Je nach Käferart werden in Verbindung mit Pheromonen verschiedene Fangtechniken eingesetzt, um einen Teil dieser Käfer wie Buchdrucker (Ips typographus) und Kupferstecher (Pityogenes chalcographus) von den Bäumen und liegendem Holz abzuhalten und letztlich damit den Befall an stehenden Bäumen sowie liegendem Holz zu verringern.

Natürliche Fangsysteme (Fangholzhaufen, Fanghölzer) sowie Fallen, insbesondere Flachtrichterfallen haben sich gut bewährt. Der Nutzholzborkenkäfer (Trypodendron lineatum) darf nur in Fallen gefangen werden.

Die für das Fangen von Käfern verwendeten Fallen haben den Nachteil, dass sie regelmäßig in Abständen von etwa 8 bis 10 Tagen geleert werden müssen, um einen Verwesungsgeruch durch die gefangenen und verendeten Käfer zu vermeiden. Werden Fallen nicht regelmäßig gereinigt, würde der auftretende Aasgeruch die Fangleistung erheblich beeinträchtigen und damit den Fang und die Abschöpfung der Käfer nur mit Einschränkungen erlauben. Ausgehend von einer Fruchtperiode von 120 bis 160 Tagen für Borkenkäfer ist zwangsläufig eine 12 bis 16-malige Reinigung der Fallen erforderlich.

Ein Auffangbehälter der eingangs genannten Gattung ist aus der DE 20 2005 015 935 U1 bekannt. Nachteilig bei der bekannten Schlitzfalle für Borkenkäfer ist es, dass ein Ablauf für Regenwasser vorgesehen ist, durch den auch Borkenkäfer ins Freie gelangen können, nachdem sie mit einem mit Insektizid getränktem Trägermaterial in Berührung gekommen und durch das Insektizid kontaminiert worden sein sollen. Dies ist insofern ein Nachteil, als die Borkenkäfer ins Freie gelangen können, sodass, insbesondere wenn das Trägermaterial nicht hinreichend mit Insektizid getränkt ist, die Wirksamkeit der bekannten Schlitzfalle beeinträchtigt ist.

Der Erfindung liegt die Aufgabe zu Grunde, einen Auffangbehälter für Flachtrichterfallen (Schlitzfallen) vorzuschlagen, der die geschilderten Nachteile der bekannten Auffangbehälter für Flachtrichterfallen nicht aufweist.

Gelöst wird diese Aufgabe erfindungsgemäß mit einem Auffangbehälter, welcher die Merkmale von Anspruch 1 aufweist.

Bevorzugte und vorteilhafte Ausgestaltungen der Erfindung sind Gegenstand der Unteransprüche.

Da bei dem erfindungsgemäßen Auffangbehälter im unteren Teil eine konservierende/desodorierende Flüssigkeit vorgesehen ist, und überdies unterhalb des am unteren Ende der Flachtrichterfalle angeordneten Trichters im erfindungsgemäßen Auffangbehälter eine Ableitrinne für Regenwasser vorgesehen ist, kann der erfindungsgemäße Auffangbehälter zwei Liter Flüssigkeit, z.B. eine desodorierende/konservierende Flüssigkeit, enthalten und bis zu etwa 10.000 Käfer arretieren.

Da überdies bei dem erfindungsgemäßen Auffangbehälter die Rinne oben durch ein Gitter abgedeckt ist, kann zwar Regenwasser in die Rinne eindringen und über die Rinne aus der Wanne des Auffangbehälters seitlich austreten, wogegen die in den Auffangbehälter gelangenden Insekten (Borkenkäfer) nicht in die Rinne und über diese ins Freie gelangen können, sondern im Auffangbehälter zurückgehalten werden.

Weitere Einzelheiten und Merkmale der Erfindung ergeben sich aus der nachstehenden Beschreibung eines bevorzugten Ausführungsbeispieles an Hand der Zeichnungen.

Es zeigt:

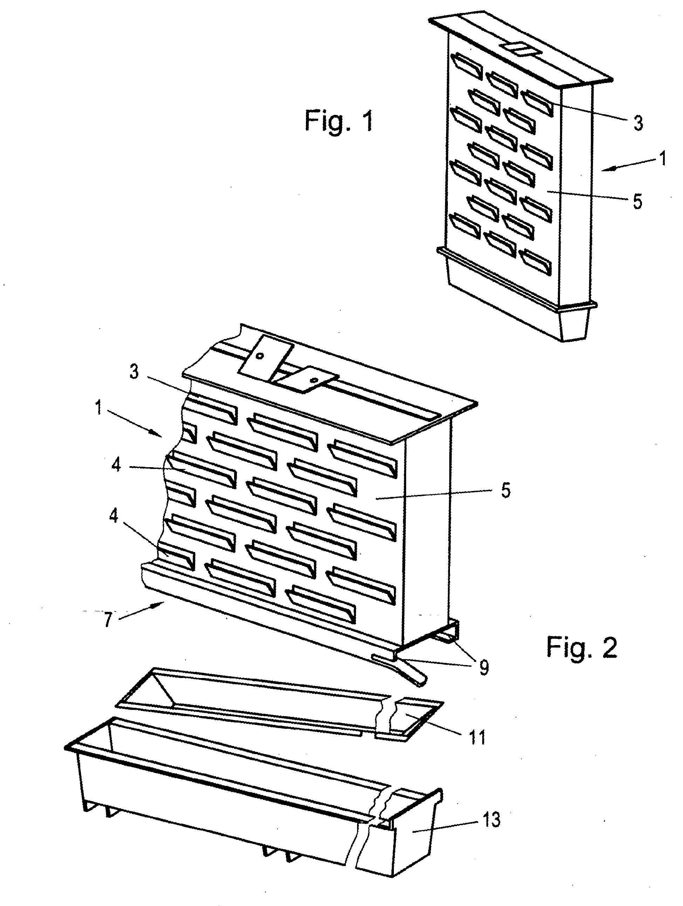

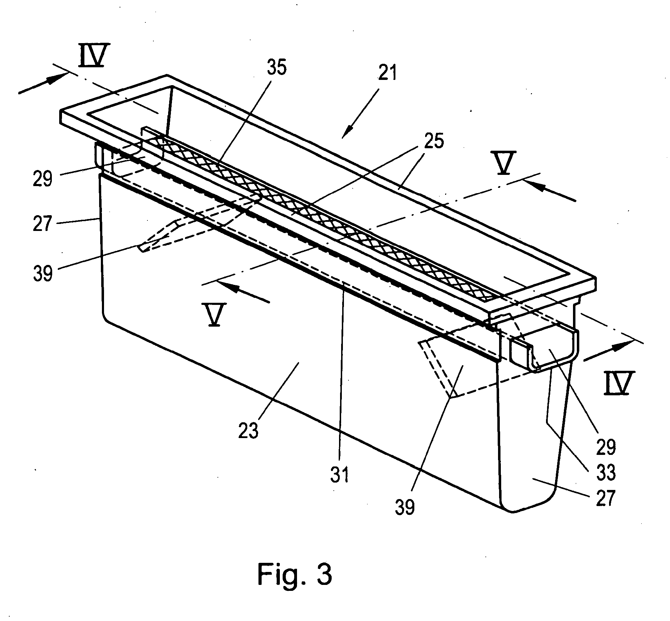

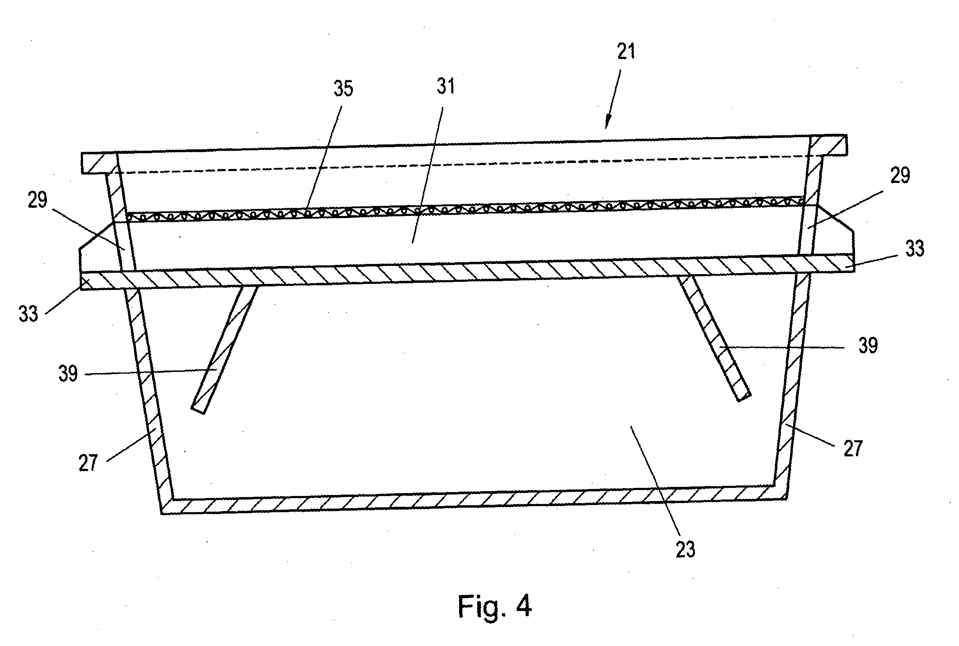

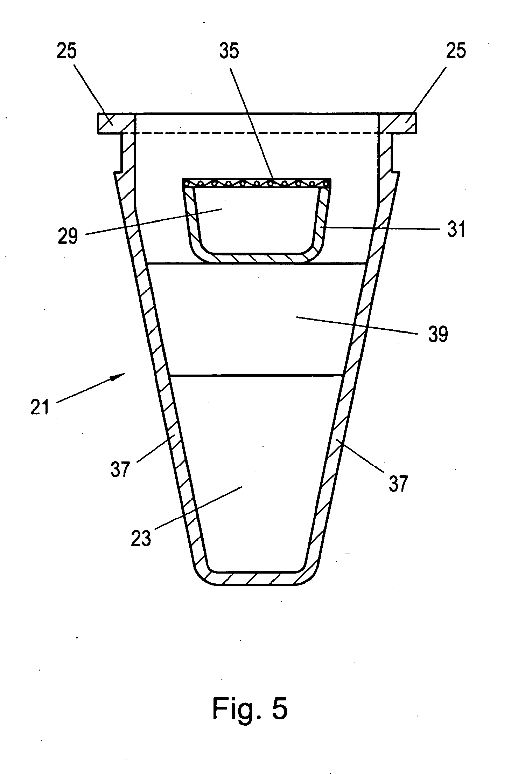

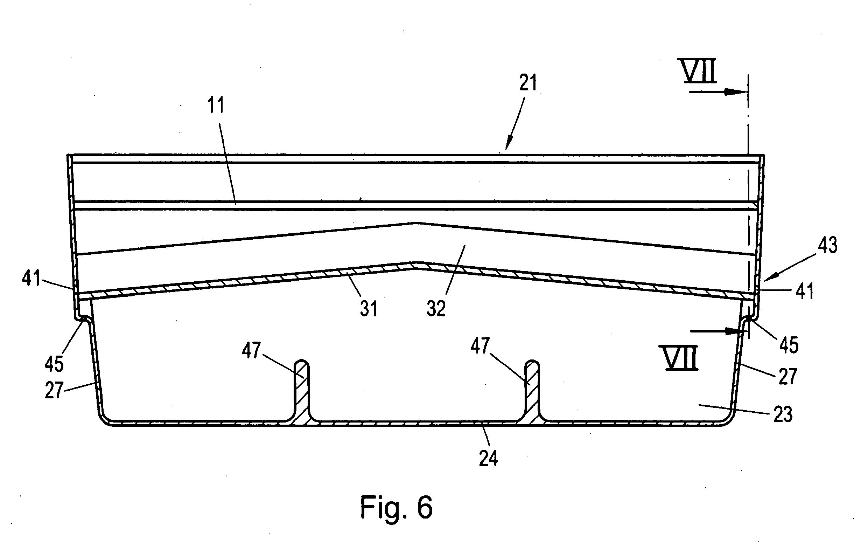

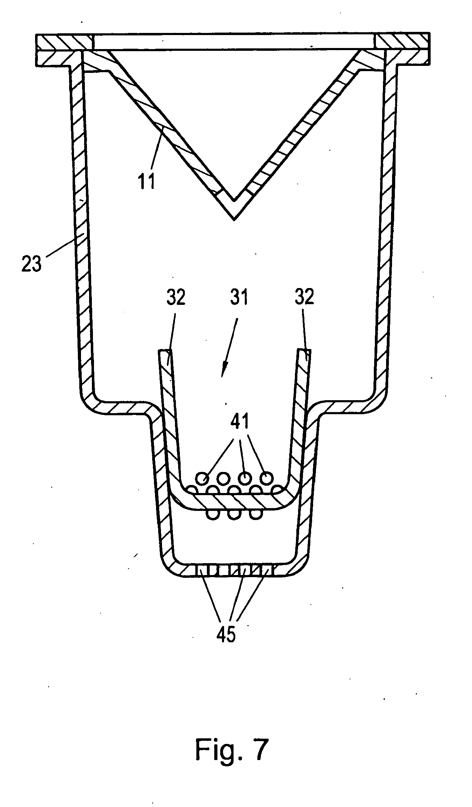

Fig. 1 eine bekannte Borkenkäfer-Schlitzfalle der Bauart Theysohn, Fig. 2 die Schlitzfalle aus Fig. 1 in auseinandergezogener Darstellung, Fig. 3 in Schrägansicht einen erfindungsgemäßen Auffangbehälter, Fig. 4 einen Schnitt längs der Linie IV -IV in Fig. 3, Fig. 5 einen Schnitt längs der Linie V - V in Fig. 3, Fig. 6 im Längsschnitt eine andere Ausführungsform und Fig. 7 einen Schnitt längs der Linie VII - VII in Fig. 6.

Eine bekannte Borkenkäfer-Schlitzfalle, wie sie in den Fig. 1 und 2 dargestellt ist, besteht aus der eigentlichen Falle 1, die ein kastenförmiger Bauteil mit Schlitzen 3 in den Seitenwänden 5 und mit zu den Seitenwänden 5 schräg nach oben weisenden Laschen 4 ist. Am unteren Ende 7 der Falle 1 wird in Nuten 9 ein Trichter 11 eingeschoben, unter dem ein Auffangbehälter 13 angeordnet wird, der ebenfalls in die Nuten 9 eingeschoben ist.

Der erfindungsgemäße Auffangbehälter 21, der beispielhaft in Fig. 3 bis 5 dargestellt ist, besitzt eine Wanne 23 als Grundkörper mit an ihren oberen Längsrändern nach außen abstehenden Führungsrippen 25 über die der Auffangbehälter 21 zusammen mit dem Trichter 11 am unteren Ende der Schlitzfalle 1 in die dort vorgesehenen Nuten 9 eingeschoben werden kann.

Die Wanne 23 des Auffangbehälters 21 gemäß der Erfindung ist bevorzugt aus durchsichtigem Werkstoff (durchsichtiger Kunststoff) gefertigt.

In den Schmalwänden 27 der Wanne 23 des erfindungsgemäßen Auffangbehälters 21 sind Öffnungen 29 vorgesehen, zwischen welchen sich eine Rinne 31 erstreckt, die mit ihren Enden 33 über die Schmalwände 27 übersteht, wie dies in Fig. 3 und 4 gezeigt ist. Die Rinne 31 steht demnach mit wenigstens einem Ende über der Wanne 23 nach außen vor. Innerhalb der Wanne 23 des Auffangbehälters 21 ist die Rinne 31 nach oben hin durch ein Gitter 35 abgedeckt.

Unterhalb der Rinne 31 sind im Beispiel sich von Längswand 37 zu Längswand 37 der Wanne 23 erstreckende, zur Rinne 31 schräg gestellte Platten 39 vorgesehen. Diese Platten 39 verhindern nach der Art von "Wellenbrechern" ein Überschwappen von in den unteren Teil des Behälters 23 eingefüllter Flüssigkeit, wenn mit dem Auffangbehälter 21 hantiert wird, um diesen an das untere Ende 7 der Schlitzfalle 1 anzusetzen, oder von dieser abzunehmen, oder wenn die Falle 1 pendelnd aufgehängt ist, und bei Wind zu schwingen beginnt.

Im unteren Bereich der Wanne 23 des Auffangbehälters 21 wird eine Flüssigkeit eingefüllt, die mit konservierenden und desodorierenden Zusätzen versehen ist.

In den oberen Teil der Falle 1 wird ein für die zu fangende Käferart geeigneter Lockstoff eingehängt.

Die Funktion des erfindungsgemäßen Auffangbehälters 21 ist folgende:

Die zu fangenden Käfer fliegen durch Schlitze 3 in den oberen Teil der Falle 1 und fallen anschließend durch den Trichter 11 in den erfindungsgemäßen Auffangbehälter 21, wobei sie auf das oberhalb der Rinne 31 vorgesehene Gitter 35 treffen. Von diesem Gitter 35 fallen die Käfer in die Wanne 23 des Auffangbehälters 21 und in die dort vorgesehene Flüssigkeit mit desodorierenden/konservierenden Zusätzen.

Allenfalls in die Falle 1 eindringendes Regenwasser - dies ist nicht ausgeschlossen, da die Schlitze 3 in den Längswänden der Falle 1 mit schräg nach außen weisenden Laschen 4 versehen sind - gelangt über den am unteren Ende zwischen Falle 1 und Auffangbehälter 21 vorgesehenen Trichter 11 durch das Gitter 35 in die Rinne 31. Regenwasser kann seitlich durch die Öffnungen 29 (wenigstens eine Öffnung 29) aus dem Auffangbehälter 21 abströmen und bleibt nicht im Auffangbehälter 21.

Dank der wenigstens zwei Platten 39, die unterhalb der Rinne 31 innerhalb der Wanne 23 des Auffangbehälters 21 vorgesehen sind, wird verhindert, dass in der Wanne 23 enthaltene Flüssigkeit in heftige Bewegung gerät, wenn mit dem Auffangbehälter 21 für die Kontrolle oder ähnliches hantiert wird, oder wenn die Falle 1 durch Wind o.ä. in Bewegung gerät.

In einer bevorzugten Ausführungsform ist die Wanne 23 so dimensioniert, dass sie etwa zwei Liter Flüssigkeit mit desodorierenden/konservierenden Zusätzen aufnehmen kann, was es erlaubt etwa 10.000 Borkenkäfer zu arretieren.

Bei der in Fig. 6 und 7 gezeigten Ausführungsform ist die in der Wanne 23 des Auffangbehälters 21 vorgesehene Rinne 31 zu beiden Schmalseiten 27 der Wanne 23 hin von einem höchsten Punkt etwa in der Mitte der Wanne 23 schräg nach unten verlaufend ausgerichtet. Die beiden Hälften der Rinne 31 schließen mit dem Boden 24 der Wanne 23 jeweils spitze Winkel ein.

Bei der in Fig. 6 und 7 gezeigten Ausführungsform steht die Rinne 31 nicht über die Schmalwände 27 der Wanne 23 vor, sondern endet innerhalb der Wanne 23, an den Schmalwänden 27 angrenzend bzw. anliegend.

Bei der in den Fig. 6 und 7 gezeigten Ausführungsform sind die Enden der insgesamt gewinkelten Rinne 31 in Ausbauchungen 43 der Schmalwände 27 der Wanne 23 eingesetzt. Die Rinne 31 besitzt eine im Wesentlichen trapezförmige Querschnittsform, bei der die Schenkel 32 der Rinne 31 zueinander unter einem spitzen Winkel derart ausgerichtet sind, dass die Rinne 31 von oben nach unten schmäler wird. Sinngemäß sind die seitlichen Bereiche 44 der Ausbauchungen 43 zueinander schräg gestellt, so dass die Enden der Rinne 31 in die Ausbauchungen 43 eingedrückt werden können (vgl. Fig. 7).

Um den Ablauf von Wasser durch die Rinne 31 aus der Wanne 23 des Behälters 21 zu erlauben, sind in den Schmalseiten 27, den Enden der Rinne 31 gegenüberliegend, Löcher 41 für den Durchtritt von Wasser vorgesehen.

Zusätzlich sind Löcher 45 in den unteren Bereichen der Ausbauchungen 43, welche die Enden der Rinne 31 aufnehmen, vorgesehen, damit absickerndes Wasser ebenfalls aus der Wanne 23 herausrinnen kann und nicht in, in der Wanne 23 enthaltene, Flüssigkeit eindringt und dort die Konzentration der Wirkstoffe verändert.

Bei der in Fig. 6 gezeigten Ausführungsform ist eine andere Variante der als Wellenbrecher dienenden Platten 39 vorgesehen. Diese sind hier als von dem Boden 24 der Wanne 23 nach oben stehende Wände 47 ausgebildet.

Die in Fig. 6 und 7 gezeigte Ausführungsform der Rinne 31 und gegebenenfalls deren Festlegung in der Wanne 23 kann auch bei der in den Fig. 3 bis 5 gezeigten Ausführungsform des erfindungsgemäßen Auffangbehälters 21 verwirklicht werden. Ebenso können, an Stelle der mit der Rinne 31 verbundenen Wände 39 (Fig. 3 bis 5), die als Wellenbrecher dienen, auch für die in Fig. 3 bis 5 gezeigte Ausführungsform vom Boden 24 der Wanne 23 abstehende Wände 47 wie in Fig. 6 gezeigt vorgesehen sein.

Die Vorteile des erfindungsgemäßen Auffangbehälters 21 für Schlitzfallen für Käfer sind je nach Ausführungsform folgende:
- Reduzierung des Arbeitsaufwandes bei der Fallenreinigung um etwa 80%,
- keine Gefahr des Auftretens von Aasgeruch und damit maximale Abschöpfung der Käfer.
- Gegenüber anderen Systemen können Flugbeginn und über eine Messeinrichtung in groben Zügen der Flugverlauf verfolgt werden, da der Auffangbehälter aus durchsichtigem Werkstoff besteht.
- Kein Einsatz von Pestiziden sondern ausschließlich von unbedenklichen Konservierungsstoffen wie sie auch in der Medizin oder im Haushalt verwendet werden.

Mit der Erfindung wird ein Fangsystem für verschiedene Insektenarten zur Verfügung gestellt, das thermische, taktile, olfaktorische und chemische Komponenten zusammenführt, um örtlich eine wirksame Abschöpfung auch unter schwierigen topographischen Bedingungen zu erreichen. Hierbei wurden die Nachteile der repellenten Wirkung schlecht gewarteter Fallen ausgeschlossen. Wenn der Auffangbehälter aus durchsichtigem Kunststoff besteht, ist überdies eine Quantifizierung der Befallssituation ermöglicht. Der Personalaufwand ist hierbei auf ein Minimum reduzierbar. Speziell dieser letzte Punkt spielt in der Forstwirtschaft eine immer größer werdende Rolle.

Der erfindungsgemäße Auffangbehälter ergibt ein effektives Fangsystem für z.B. rindenbrütende Borkenkäfer und kann eines, zwei oder mehrere der nachstehend genannten Merkmale/Wirkungen aufweisen/haben:
a.) Einsatz artspezifischer synthetischer Aggregationspheromone,
b.) Einsatz handelsüblicher Schlitzfallensysteme,
c.) ausreichend dimensionierte Landeflächen mit freiem Anflug (Fangsystem muss höher als Bodenvegetation der Umgebung sein,
d.) günstige Thermik für die abdunstenden Pheromone im Fangsystem (z.B. Kamineffekt),
e.) ausreichende Stabilität des Systems (Wind, Regen, Sturm, Schwarzwild etc.)
f.) geringes Gewicht und leichte Handhabung, auch in schwerem Gelände (Steilhang),
g.) effektives, gleichzeitig jedoch umweltschonendes Ausschalten der angeflogenen Käfer durch nicht chemische Pheromonsysteme.

Die Rinne 31 kann einschließlich ihrer über die Schmalwände 27 der Wanne 23 des Auffangbehälters 21 nach außen vorstehenden Enden einstückig ausgebildet sein.

Insbesondere bei einer einstückig ausgebildeten Rinne 31 kann diese an der Wanne 23 lösbar festgelegt, z.B. wenigstens in einer der Schmalwände 27 verrastet sein.

Um einen vorgegebenen Pegelstand in der Wanne 23 des Auffangbehälters 21 einzuhalten bzw. einzustellen, kann dem Auffangbehälter 21 eine Einrichtung zum Regeln der Wasserzufuhr (Regenwasserzufuhr), beispielsweise in Form einer von Hand aus zu betätigenden Wasserschleuse, zugeordnet sein. Diese Einrichtung führt der Wanne 23 des Auffangbehälters 21 Wasser dosiert zu.

Zusätzlich oder alternativ kann der Auffangbehälter 21, insbesondere im Bereich der Wanne 23, eine, den Durchtritt von Insekten nicht erlaubende, z.B. vergitterte, Überlauföffnung oder einen syphonartigen Überlauf aufweisen, um den Stand von Flüssigkeit in der Wanne 23 zu begrenzen.

Zusammenfassend kann ein Ausführungsbeispiel der Erfindung wie folgt beschrieben werden:

Ein am unteren Ende einer Borkenkäfer-Schlitzfalle 1 angeordneter Auffangbehälter 21 besteht aus durchsichtigem Werkstoff und ist mit einer sich in Längsrichtung des Auffangbehälters 21 erstreckenden Rinne 31 ausgestattet. Den Enden 33 der Rinne 31 sind Öffnungen 29, 41 in den Schmalwänden 27 des Auffangbehälters 21 zugeordnet. An der Oberseite ist die Rinne 31 durch ein Gitter 35 abgedeckt. Durch den Trichter 11 am unteren Ende der Schlitzfalle 1 in den Auffangbehälter 21 gelangende Käfer, fallen in die Wanne 23 des Auffangbehälters 21 in dort vorgesehene Flüssigkeit mit desodorierenden/konservierenden Zusätzen, sodass Aasgeruch verhindert ist. Allenfalls in den Auffangbehälter 21 über den Trichter 11 am unteren Ende 7 der Schlitzfalle 21 eintretendes Regenwasser durchdringt das Gitter 35, gelangt in die Rinne 31 und strömt durch diese aus dem Innenraum der Wanne 23 des Auffangbehälters 21 ab.

## Patentansprüche

1. Auffangbehälter (21) für Schlitzfallen (1) mit einer Wanne (23), mit nach außen weisenden Rippen (25), die an den oberen Längsrändern der Wanne (23) vorgesehen sind, und mit einer sich in Längsrichtung der Wanne (23) des Auffangbehälters (21) erstreckenden, nach oben offenen und nach oben hin durch ein Gitter (35) abgedeckten Rinne (31), **dadurch gekennzeichnet, dass** die Rinne (31) im Inneren der Wanne (23) zwischen deren Schmalseiten (27) angeordnet ist, und dass den Enden (33) der Rinne (31) Öffnungen (29, 41) in den Schmalwänden (27) der Wanne (23) zugeordnet sind.

2. Behälter nach Anspruch 1, **dadurch gekennzeichnet, dass** der untere Raum der Wanne (23) für die Aufnahme einer Flüssigkeit mit konservierenden und/oder desodorierenden Zusätzen und als Sammelraum für gefangene Borkenkäfer vorgesehen ist.

3. Behälter nach Anspruch 1 oder 2, **dadurch gekennzeichnet, dass** in der Wanne (23) des Auffangbehälters (21) in die dort vorgesehene Flüssigkeit eintauchende Platten (39) vorgesehen sind.

4. Behälter nach Anspruch 3, **dadurch gekennzeichnet, dass** die Platten (39) zwischen den Längswänden (37) der Wanne (33) des Auffangbehälters (21) durchgehend ausgebildet sind.

5. Behälter nach Anspruch 4, **dadurch gekennzeichnet, dass** die Außenränder der Platten (39) mit den Längswänden (37) der Wanne (23) des Auffangbehälters (21) verbunden sind.

6. Behälter nach einem der Ansprüche 3 bis 5, **dadurch gekennzeichnet, dass** die Platten (39) mit ihrem oberen Rand bis an den Boden der Rinne (31) ragen.

7. Behälter nach einem der Ansprüche 1 bis 6, **dadurch gekennzeichnet, dass** die Wanne (23) des Auffangbehälters (21) aus durchsichtigem Werkstoff, insbesondere durchsichtigem Kunststoff gefertigt ist.

8. Behälter nach einem der Ansprüche 1 bis 7, **dadurch gekennzeichnet, dass** die Enden der Rinne (31) durch Öffnungen (29) in den Schmalseiten (27) der Wanne (23) nach außen ragen.

9. Behälter nach einem der Ansprüche 1 bis 8, **dadurch gekennzeichnet, dass** die Rinne (31) in der Wanne (23) schräg angeordnet ist, also mit dem Boden (24) der Wanne (23) einen spitzen Winkel einschließt.

10. Behälter nach Anspruch 9, **dadurch gekennzeichnet, dass** die Rinne (31) von einem höchsten Punkt etwa in der Mitte der Wanne (23) zu den Schmalwänden (27) hin abfallend ausgebildet ist.

11. Behälter nach einem der Ansprüche 1 bis 7, 9 oder 10, **dadurch gekennzeichnet, dass** die Enden der Rinne (31) innerhalb der Wanne (23) des Auffangbehälters (21) an die Schmalwände (27) anschließend vorgesehen sind.

12. Behälter nach Anspruch 11, **dadurch gekennzeichnet, dass** für den Austritt von Wasser im Bereich der Enden der Rinne (31) in den Schmalwänden (27) Durchtrittsöffnungen (41) vorgesehen sind.

13. Behälter nach einem der Ansprüche 1 bis 12, **dadurch gekennzeichnet, dass** die Enden der Rinne (31) in Ausbauchungen (43) in den Schmalwänden (27) der Wanne (23) aufgenommen sind.

14. Behälter nach Anspruch 13, **dadurch gekennzeichnet, dass** Austrittsöffnungen (41) im Bereich der Ausbauchungen (43) vorgesehen sind.

15. Behälter nach Anspruch 13 oder 14, **dadurch gekennzeichnet, dass** in einem unteren, parallel zum Boden (24) der Wanne (23) ausgerichteten, Bereich der Ausbauchungen (43) Durchtrittsöffnungen (45) für Wasser vorgesehen sind.

16. Behälter nach einem der Ansprüche 13 bis 15, **dadurch gekennzeichnet, dass** die Rinne (31) eine im Wesentlichen trapezförmige Querschnittsform aufweist.

17. Behälter nach Anspruch 16, **dadurch gekennzeichnet, dass** die Schenkel (32) der Rinne (31) zueinander derart schräg gestellt sind, dass die Rinne (31) von oben nach unten schmäler wird.

18. Behälter nach einem der Ansprüche 13 bis 17, **dadurch gekennzeichnet, dass** die seitlichen Bereiche der Ausbauchungen (43) miteinander einen spitzen Winkel einschließen.

19. Behälter nach Anspruch 18, **dadurch gekennzeichnet, dass** die Winkel, welche die Schenkel (32) der Rinne (31) und die seitlichen Bereiche der Ausbauchungen (43) einschließen, im Wesentlichen identisch sind.

20. Behälter nach einem der Ansprüche 1 bis 19, **dadurch gekennzeichnet, dass** vom Boden (24) der Wanne (23) nach oben abstehende Wände (47), die zur Längsvorstreckung der Wanne (23) im Wesentlichen quer ausgerichtet sind, vorgesehen sind.

## Claims

1. A collecting vessel (21) for slot traps (1) having a tank (23), with outward pointing fins (25) provided on the upper long edges of the tank (23), and having a channel (31) extending in the longitudinal direction of the tank (23) of the collecting vessel (21), open at the top and covered towards the top by a grill (35),
**characterized in that**
the channel (31) is arranged inside the tank (23) between the narrow sides (27) thereof, and that openings (29, 41) are associated with the ends (33) of the channel (31) in the narrow walls (27) of the tank (23).

2. The vessel according to Claim 1,
**characterized in that**
the lower space of the tank (23) is designed for holding a liquid with preserving and/or deodorising additives and as a collecting chamber for captured bark beetles.

3. The vessel according to Claim 1 or 2,
**characterized in that**
plates (39) are provided in the tank (23) of the collecting vessel (21), which submerge into the liquid provided in said tank.

4. The vessel according to Claim 3,
**characterized in that**
the plates (39) are constructed as continuous elements between the longitudinal walls (37) of the tank (33) of the collecting vessel (21).

5. The vessel according to Claim 4,
**characterized in that**
the outer edges of the plates (39) are connected to the longitudinal walls (37) of the tank (23) of the collecting vessel (21).

6. The vessel according to one of Claims 3 to 5,
**characterized in that**
the upper edges of the plates (39) project as far as the base of the channel (31).

7. The vessel according to one of Claims 1 to 6,
**characterized in that**
the tank (23) of the collecting vessel (21) is manufactured from a transparent material, in particular transparent plastic.

8. The vessel according to one of Claims 1 to 7,
**characterized in that**
the ends of the channel (31) project through openings (29) in the narrow sides (27) of the tank (23) to the outside.

9. The vessel according to one of Claims 1 to 8,
**characterized in that**
the channel (31) is arranged at an angle in the tank (23), and thus form an acute angle with the base (24) of the tank (23).

10. The vessel according to Claim 9,
**characterized in that**
the channel (31) is constructed such that it descends from a highest point approximately in the centre of the tank (23) down towards the narrow walls (27).

11. The vessel according to one of Claims 1 to 7, 9 or 10, **characterized in that**
the ends of the channel (31) inside the tank (23) of the collecting vessel (21) are joined to the narrow walls (27).

12. The vessel according to Claim 11,
**characterized in that**
to allow water to escape, passage openings (41) are provided through the narrow walls (27) in the region of the ends of the channel (31).

13. The vessel according to one of Claims 1 to 12, **characterized in that**
the ends of the channel (31) are housed in convexities (43) in the narrow walls (27) of the tank (23).

14. The vessel according to Claim 13,
**characterized in that**
passage openings (41) are provided in the region of the convexities (43).

15. The vessel according to Claim 13 or 14,
**characterized in that**
passage openings (45) for water are provided in a lower region of the convexities (43), aligned parallel to the base (24) of the tank (23).

16. The vessel according to one of Claims 13 to 15,
**characterized in that**
the channel (31) has an essentially trapezoidal cross-sectional form.

17. The vessel according to Claim 16,
**characterized in that**
the sides (32) of the channel (31) are positioned at an angle to each other in such a manner that the channel (31) becomes narrower from top to bottom.

18. The vessel according to one of Claims 13 to 17,
**characterized in that**
the lateral regions of the convexities (43) form an acute angle with each other.

19. The vessel according to Claim 18,
**characterized in that**
the angles formed by the sides (32) of the channel (31) and the lateral regions of the convexities (43) are essentially identical.

20. The vessel according to one of Claims 1 to 19,
**characterized in that**
walls (47) are provided that project up from the base (24) of the tank (23), and are aligned essentially transversely to the longitudinal extent of the tank (23).

## Revendications

1. Récipient de capture (21) pour piège à fentes (1) comportant un bac (23), avec des nervures (25) dirigées vers l'extérieur, qui sont prévues sur les bords longitudinaux supérieurs du bac (23), et comportant une rigole (31) s'étendant dans la direction longitudinale du bac (23), ouverte vers le haut et recouverte vers le haut par une grille (35), **caractérisé en ce que** la rigole (31) est disposée à l'intérieur du bac (23) entre ses côtés étroits (27) et **en ce que** des ouvertures (29,41) dans les parois étroites (27) du bac (23) sont coordonnées aux extrémités (33) de la rigole.

2. Récipient selon la revendication 1, **caractérisé en ce que** l'espace inférieur du bac (23) est prévu pour recevoir un liquide avec des additifs conservateurs et/ou désodorisants et comme espace de collecte des bostryches capturés.

3. Récipient selon la revendication 1 ou 2, **caractérisé en ce que**, dans le bac (23) du récipient de capture (21), des plaques (39) plongeant dans le liquide qui s'y trouve sont prévues.

4. Récipient selon la revendication 3, **caractérisé en ce que** les plaques (39) sont conçues de manière à traverser les parois longitudinales (37) du bac (33) du récipient de capture (21).

5. Récipient selon la revendication 4, **caractérisé en ce que** les bords extérieurs des plaques (39) sont reliés aux parois longitudinales (37) du bac (23) du récipient de capture (21).

6. Récipient selon une des revendications 3 à 5, **caractérisé en ce que** les plaques (39) dépassent par leur bord supérieur jusqu'au fond de la rigole (31).

7. Récipient selon une des revendications 1 à 6, **caractérisé en ce que** le bac (23) du récipient de capture (21) est fabriqué dans un matériau transparent, notamment un plastique transparent.

8. Récipient selon une des revendications 1 à 7, **caractérisé en ce que** les extrémités de la rigole (31) dépassent vers l'extérieur à travers des ouvertures (29) dans les côtés étroits (27) du bac (23).

9. Récipient selon une des revendications 1 à 8, **caractérisé en ce que** la rigole (31) dans le bac (23) est disposée obliquement, c'est-à-dire qu'elle forme un angle aigu avec le fond (24) du bac (23).

10. Récipient selon la revendication 9, **caractérisé en ce que** la rigole (31) est conçue de manière à aller en déclinant d'un point le plus élevé approximativement au centre du bac (23) vers les parois étroites (27).

11. Récipient selon une des revendications 1 à 7, 9 ou 10, **caractérisé en ce que** les extrémités de la rigole (31) sont prévues de manière à se joindre à l'intérieur du bac (23) du récipient de capture (21) sur les parois étroites (27).

12. Récipient selon le récipient 11, **caractérisé en ce que** des ouvertures traversantes (41) sont prévues pour la sortie d'eau au niveau des extrémités de la rigole (31) dans les parois étroites (27).

13. Récipient selon une des revendications 1 à 12, **caractérisé en ce que** les extrémités de la rigole (31) sont logées dans des renflements (43) dans les parois étroites (27) du bac (23).

14. Récipient selon la revendication 13, **caractérisé en ce que** les ouvertures de sortie (41) sont prévues au niveau des renflements (43).

15. Récipient selon la revendication 13 ou 14, **caractérisé en ce que** dans une région inférieure, parallèle au fond (24) du bac (23) des renflements (43), des ouvertures traversantes (45) pour l'eau sont prévues.

16. Récipient selon une des revendications 13 à 15, **caractérisé en ce que** la rigole (31) présente une forme de section transversale essentiellement trapézoïdale.

17. Récipient selon la revendication 16, **caractérisé en ce que** les pans (32) de la rigole (31) sont placés obliquement l'un par rapport à l'autre, de sorte que la rigole (31) soit plus étroite du haut vers le bas.

18. Récipient selon une des revendications 13 à 17, **caractérisé en ce que** les régions latérales des renflements (43) forment conjointement un angle aigu.

19. Récipient selon la revendication 18, **caractérisé en ce que** les angles, que forment les pans (32) de la rigole (31) et les régions latérales des renflements (43), sont essentiellement identiques.

20. Récipient selon une des revendications 1 à 19, **caractérisé en ce que** des parois (47) se dressant vers le haut à partir du fond (24) du bac (23), qui sont alignées essentiellement transversalement par rapport à l'extension longitudinale du bac (23) sont prévues.
